(19) Europäisches Patentamt
European Patent Office
Office européen des brevets

(11) **EP 3 166 064 A1**

(12) **EUROPEAN PATENT APPLICATION**

(43) Date of publication:
**10.05.2017 Bulletin 2017/19**

(51) Int Cl.:
*G06Q 30/02* (2012.01)          *G06Q 40/02* (2012.01)
*G06Q 10/06* (2012.01)

(21) Application number: **16020390.7**

(22) Date of filing: **09.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.10.2015   US 201514879325**

(71) Applicant: **Pollen Capital Ltd.**
**Surbiton, Surrey KT6 5PT (GB)**

(72) Inventors:
• **Parkin, Adam Tobias**
  **London, N17JW (GB)**
• **Williams, Richard James**
  **Egham, Surrey TW20 8NS (GB)**
• **Houghton, Liam James**
  **Warwick, CV346LR (GB)**

(74) Representative: **Norris, Timothy Sweyn**
**Basck**
**16 Saxon Road**
**Cambridge CB5 8HS (GB)**

(54) **CONTROL APPARATUS AND ACCELERATING METHOD**

(57)     A control apparatus increases a velocity of capital and/or resources when developing, marketing and selling products. The control apparatus includes a user acceptance module for receiving parameters describing a system user, and for analyzing the parameters to determine whether or not the system user is acceptable to the control apparatus; a logic of operation module for collecting commercial activity of the at least one system user; the commercial transaction monitoring module for monitoring and/or facilitating the commercial transactions of the system user, accepted by the control apparatus, with customers of the system user; a commercial transaction buffering module for receiving payment associated with the commercial transactions of the system user; and the advertising module arranged for communicating with devices connected to a network of computer servers for directly placing or ceasing an advertisement of a product of the at least one system user, on at least on device or website.

FIG.1

EP 3 166 064 A1

**Description**

TECHNICAL FIELD

The present disclosure relates to control apparatus for improving a rate of functioning of a system, for example a control apparatus for increasing a rate of functioning, namely providing "velocity acceleration", of a system handling financial capital, resources and/or commodity flows; for example, the control apparatus is capable of increasing a velocity of finance associated with products which have a relatively rapid growth pattern, for example, products including software components. Moreover, the present disclosure also relates to methods of using aforementioned control apparatus, for example for promoting business growth and product sales. Furthermore, the present disclosure also relates to software products recorded on non-transitory (non-transient) machine-readable data storage media, wherein the software products are executable upon computing hardware for implementing aforementioned methods.

**BACKGROUND**

Many contemporary products, for example fast moving consumer goods (commonly known as "FMCG"), consumer electronics products, consumer products including software, fashion jewelry, fashion shoes, clothes have a short development time, and are thereafter susceptible to a relatively short product-relevance lifetime, before they are superseded by more technically advanced products and/or changes in consumer tastes and fashions. Software products, in particular software applications ("Apps"), fall into the aforementioned contemporary products, wherein changes in consumer tastes and fashions may occur in a matter of days. Especially pertinent products, in this respect, include software applications ("Apps") where the Apps are readily downloadable via wireless communication to mobile communication devices including in-built computing hardware capable of executing such software applications, for example, computer games terminals, and electronic musical instruments with downloadable instrument samples.

A common problem of many producers, developers, sellers of the aforementioned contemporary products is that, despite any interlinked systems for distribution of information, which is possible in real-time for devices connected to a network, the flow of revenues resulting from sales of the aforementioned products does not occur with a mutually similar velocity. Such sales revenues, for example, are closely tied to a particular sequence or chain of events related to one or more merchants selling the products or a financial system associated therewith.

Producers, developers, sellers of the aforementioned contemporary products tend to become dependent on an external provider of resources, for example a lender of commodities, or for example, banks that lend re-investment capital, to maintain an acceptable level of operating efficiency.

Businesses which choose not to access external providers of resources, or for another reason, including those commonly associated with FMCG products, cannot access resources from an external provider, for example, because the fast changes in the market are considered overly risky by the external provider, may be incapable of improving their operating efficiency, for example by increasing production to meet demand or, in case of software applications, by advertising their products before they receive sales revenue. Such lack of efficiency can have implications in relation to physical resources, for example a degree of waste generated during manufacture.

The consumer response to advertising is a key metric for decision making for developers and merchants of "Apps" for new generations of mobile phones and games-playing terminals. In particular, those phones and games playing terminals compatible with contemporary 3G or 4G wireless communication networks have recently experienced an explosive growth in "Apps" developed for these devices. Mobile phone manufacturers now offer application stores, or "app stores", where a given customer can purchase apps for his/her phone. App stores, however, are usually distinct from their associated telecoms, or telecommunication system operators, and telecoms in general have not been able to benefit greatly from this separate arrangement.

In a published United States patent application US2012/278175A1, (IBM Corp., USA, published 1 Nov. 2012, "*Methods and arrangements of monetizing telecom app-stores through API usage*") there are described methods and arrangements for monetizing telecom applications. In the methods, advertising input is accepted, as well as contractual input relating to advertisement dissemination. An advertisement is associated with a telecom customer based on matchmaking criteria, and the advertisement is output to one or more customers based on the contractual input. Outputting of the advertisement includes propagating the advertisement selectively via at least one of: an in-application channel, wherein the advertisement is associated with a telecom application used by the one or more customers; and an out-of-application channel, wherein the advertisement is propagated directly to the customer.

However, despite the aforesaid methods and systems, it is generally difficult for developers of electronic products, for example those including software applications as a component parts thereof, namely "Apps", to finance development of their software applications, and receive income therefrom promptly when they are downloaded by one or more customers from an app store wherefrom the software applications are made available to one or more customers. However, such considerations pertain mutatis mutandis to other types of contemporary technical products, and not just to software applications, for example games terminals, smart grid energy efficiency apparatus for improving household energy efficiency, electronic musical instruments and similar.

Computer-based control apparatus, for example industrial controllers for controlling operation of factories, chemical refineries, mining operations, power plant, domestic premises and similar are well known and provide a useful technical functionality, which, for example, is capable of reducing costs, achieving more efficient user of resources and similar.

**SUMMARY**

The present invention seeks to provide a control apparatus which is operable to improve operating performance of a system, for example for increasing a rate of operation of the system or improving an efficiency of operation of the system, for example for providing "velocity acceleration" of the aforesaid system.

Moreover, the present invention seeks to provide a software product recorded on non-transitory machine-readable data storage media, where the software product is executable upon computing hardware for implementing the method of using the control apparatus.

According to a first aspect, there is provided a control apparatus for improving an operating performance of a system, wherein the control apparatus is operable to improve a rate of performance of the system by increasing a velocity of flow of resources, including, but not limited to, financial capital and/or commodities when developing, marketing and/or performing a commercial transaction, which includes but is not limited to sales, related to one or more products, wherein the control apparatus includes: (i) a user acceptance module for receiving one or more parameters describing at least one system user, and for analyzing the one or more parameters to determine whether or not the at least one system user is acceptable to the control apparatus; (ii) a logic of operation module for collecting from a plurality of sources, analyzing, treating and modelling data and parameters, and assign a monetary value associated with one or more commercial transactions (for example sales) of the at least one system user accepted by the control apparatus, and for feeding commercial transaction monitoring and buffering modules and an advertising module with information and recommendations regarding current and projected monetary value resulting from one or more commercial transactions and optimum advertising time and host; (iii) the commercial transaction monitoring module arranged for monitoring and/or facilitating one or more commercial transactions associated with of one or more products (for example sales) from the at least one system user to one or more customers of the system user, wherein the monitoring and/or facilitating of commercial activity includes monitoring and/or facilitating of one or more elements of finance, physical materials, mechanical components, electrical components, packaging; (iv) a commercial transaction buffering module for receiving information related to one or more commercial transactions associated with of one or more products of the at least one system user and for providing to the at least one system user payments or rewards, including in the form of credit, which are at least one of: temporally in advance of receipt of payment by the control apparatus of a documented sale of the one or more products to the one more customers, at temporal intervals which are more frequent than the receipt of payment associated with the documented sale of the one or more products to the one more customers; and (v) the advertising module arranged for communicating with devices connected to a network, including but not limited to local or remote computers, mobile devices, computer servers hosting websites and billboards; and for directly placing or ceasing an advertisement of a product of the at least one system user, on at least one device or website.

Optionally, the control apparatus is implemented, so that the commercial transaction buffering module is configurable to divide a portion of the monetary value assigned to at least one commercial transaction, including but not limited to, received payments, to the at least one system user, accepted by the control apparatus, and another portion of the monetary value assigned to one or more advertising promotions for promoting sales or other commercial transaction activity of the one or more products via an advertising module of the control apparatus.

Optionally, the control apparatus is implemented, so that the one or more products include one or more software applications (Apps) downloadable from a software application store (app store) to the one or more customers, wherein the one or more software products are executable upon computing hardware for providing a technical operating functionality to the computing hardware.

Optionally, the control apparatus is implemented, so that the commercial transaction buffering module, for receiving payment associated with the sales of the one or more products, is operable to retain a portion of the payment for retention of one or more operators of the control apparatus, to finance operation of the control apparatus.

Optionally, the control apparatus is implemented, so that the advertising module is operable to place or to cease advertisements for the one or more products based upon at least one of: monitoring markets into which the one or more products are being sold, an analysis of potential markets in which the one or more products are susceptible to being sold based on parameters describing one or more characteristics of the one or more products.

Optionally the control apparatus is implemented, so that the logic of operation module is operable to collect, including by harvesting in real time from devices and website hosts connected to a network, data and information associated with the commercial transaction activities of the at least one system user.

Optionally the control apparatus is implemented, so that the logic of operation module is operable to model parameters, calculate and recommend an optimum portion of available monetary value, including, but not limited to, revenues from sales, to be directed to early advertising. In other words, the logic of operation module is operable to recommend the creation of an increase of an early advertising budget.

Optionally the control apparatus is implemented, so that the logic of operation module is operable to model parameters, calculate and recommend the optimum advertising time and advertising host, based on, for example, the recommended early advertising budget, advertising costs and the instant or average consumer response to advertising at a particular host for a particular product.

Optionally the control apparatus is implemented, so that the logic of operation module is operable to project potential revenues from commercial transactions, including, but not limited to sales, including in real-time, based on market information and/or recommendations made to previous users.

Optionally, the control apparatus is implemented so that the modules are operable to improve a rate of performance of the system by increasing a velocity of flow of resources, including, but not limited to, financial capital and/or commodities when developing, marketing and/or performing a commercial transaction, which includes but is not limited to the provision of one or more services.

According to a second aspect, there is provided a method of using a control apparatus for improving an operating performance of a system, wherein the control apparatus is operable to improve a rate of performance of the system by increasing a velocity of flow of resources, including, but not limited to, financial capital and/or commodities when developing, marketing and/or performing a commercial transaction, which includes but is not limited to sales, related to one or more products, wherein the control apparatus includes: (i) using a user acceptance module for receiving one or more parameters describing at least one system user, and for analyzing the one or more parameters to determine whether or not the at least one system user is acceptable to the control apparatus; (ii) using a logic of operation module for collecting from a plurality of sources, analyzing, treating and modelling data and parameters and assign a monetary value associated with one or more commercial transactions (for example sales) of the at least one system user, accepted by the control apparatus, and for feeding commercial transaction monitoring and buffering modules and an advertising module with information and recommendations regarding current and projected monetary value resulting from one or more commercial transactions and optimum advertising time and host; (iii) using the commercial transaction monitoring module arranged for monitoring and/or facilitating one or more commercial transactions associated with of one or more products (for example sales) from the at least one system user to one or more customers of the system user, wherein the monitoring and/or facilitating of commercial activity includes monitoring and/or facilitating of one or more elements including of finance, physical materials, mechanical components, electrical components, packaging; (iv) using the commercial transaction buffering module for receiving information related to one or more commercial transactions associated with of one or more products of the at least one system user and for providing to the at least one system user payments or rewards, including in the form of credit, which are at least one of: temporally in advance of receipt of payment by the control apparatus of a documented sale of the one or more products to the one more customers, at temporal intervals which are more frequent than the receipt of payment associated with the documented sale of the one or more products to the one more customers; and (v) using the advertising module arranged for communicating with devices connected to a network, including but not limited to local or remote computers, mobile devices, computer servers hosting websites and billboards; and for directly placing or ceasing an advertisement of a product of the at least one system user, on at least one device or website.

Optionally, the method includes configuring the commercial transaction buffering module is configurable to divide a portion of the monetary value assigned to at least one commercial transaction, including but not limited to, received payments, to the at least one system user, accepted by the control apparatus, and another portion of the monetary value assigned to one or more advertising promotions for promoting sales or other commercial transaction activity of the one or more products via an advertising module of the control apparatus.

Optionally, when implementing the method, the one or more products include one or more software applications (Apps) downloadable from a software application store (app store) to the one or more customers, wherein the one or more software products are executable upon computing hardware for providing a technical operating functionality to the computing hardware.

Optionally, when implementing the method, the commercial transaction buffering module, for receiving payment associated with the sales of the one or more products, is operable to retain a portion of the payment for retention of one or more operators of the control apparatus, to finance operation of the control apparatus.

Optionally, when implementing the method, the advertising module is operable to place or to cease advertisements for the one or more products based upon at least one of: monitoring markets into which the one or more products are being sold, an analysis of potential markets in which the one or more products are susceptible to being sold based on parameters describing one or more characteristics of the one or more products.

Optionally, when implementing the method, the logic of operation module is collects, including by harvesting in real time from devices and website hosts connected to a network, data and information associated with the commercial transaction activities of the at least one system user.

Optionally, when implementing the method, the logic of operation module calculate and recommends an optimum portion of available monetary value, including, but not limited to, revenues from sales, to be directed to early advertising, which in turn, results on the creation of an increase of an early advertising budget.

Optionally, when implementing the method, the logic of operation module is operable to model parameters, calculate and recommend the optimum advertising time and advertising host, based on, for example, the recommended early advertising budget, advertising costs and the instant or average consumer response to advertising at a particular host for a particular product.

Optionally, when implementing the method, the logic of operation module is operable to project potential revenues from commercial transactions, including, but not limited to sales, including in real-time, based on market information and/or recommendations made to previous users.

Optionally, the method includes configuring the modules to improve a rate of performance of the system by increasing a velocity of flow of resources, including, but not limited to, financial capital and/or commodities when developing, marketing and/or performing a commercial transaction, which includes but is not limited to the provision of one or more services.

According to a third aspect, there is provided a computer program product comprising a non-transitory computer-readable storage medium having computer-readable instructions stored thereon, the computer-readable instructions being executable by a computerized device comprising processing hardware to execute a method pursuant to the second aspect.

The invention is of advantage in that the control apparatus facilitates the developers of products, including but not limited to software applications and related products, to receive revenues promptly when Apps are downloaded by one or more customers from an app store.

The control apparatus provides functionalities capable of harvesting data from a plurality of devices connected via the contemporary Internet, projecting revenues from sales, and calculating recommendations of early re-investment based specifically upon a developed sequence of mathematical models.

The control apparatus is capable of performing the aforementioned functions in real-time, and is therefore capable of adapting and optimizing the functionalities to changes in market data in any time interval.

The control system accelerates and potentially multiplies online merchant's payments to the product developers, and is clearly linked to early access to revenues from sales or projected from another commercial transaction, which, in turn, is linked to early advertisement, wherein the early advertisement is placed or ceased in one or more locations, including in real-time. The control apparatus optimizes the revenue generation and/or resource utilization by facilitating the early deployment of sales revenues and re-directing it to improve the efficiency of a system by, for example, directly advertising the product into websites or billboards connected to a computer network.

When the control system is applied to software products, it effectively enables, through early re-investment in advertising, the creation of an otherwise non-existent marketing budget or enables an increase of an existing marketing budget. Furthermore, the control system increases the efficiency of a system comprising all steps from production and/or development of a product to receipt of revenues via sales via optimizing the advertising time based on changes on the market activities, including changes in real-time. Thus, the control system is capable of providing increased efficiency in the use of resources, for example real physical resources such as energy and materials, mutatis mutandis that recycling apparatus is capable of improving the efficiency of utilization of available physical resources.

It will be appreciated that features of the invention are susceptible to being combined in various combinations without departing from the scope of the invention as defined by the appended claims.

## DESCRIPTION OF THE DIAGRAMS

Embodiments of the present disclosure, when described by way of examples, reference to the following diagrams

FIG. 1 is an illustration of an environment, wherein various embodiments of the present disclosure can be practiced;

FIG. 2 is an illustration of a control apparatus of FIG. 1, in accordance with the present disclosure;

FIG. 3 is a detailed illustration of an advertising structure of FIG. 1, in accordance with the present disclosure;

FIG. 4 is a detailed illustration of a credit and payment structure of FIG. 1, in accordance with the present disclosure; and

FIG. 5 is an illustration of steps of a method of using the control, in accordance with the present disclosure.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

**DESCRIPTION OF EMBODIMENTS**

The control apparatus disclosed herewith comprise a user acceptance module, a logic of operation module, commercial transaction monitoring and buffering modules and an advertising modules operable to improve a rate of performance of the system by increasing a velocity of flow of resources. When required, the logic of operation module may assign a monetary value for any commercial transaction that can be uniquely identified and quantified. Similarly, the commercial buffering module, when required, may provide payments to one or more system users in the form of credit or another reward.

Furthermore, the control apparatus and method disclosed herewith include configuring the comprised modules to improve a rate of performance of the system by increasing a velocity of flow of resources, including, but not limited to, financial capital and/or commodities when developing, marketing and/or performing a commercial transaction, which includes but is not limited to the provision of one or more product or services.

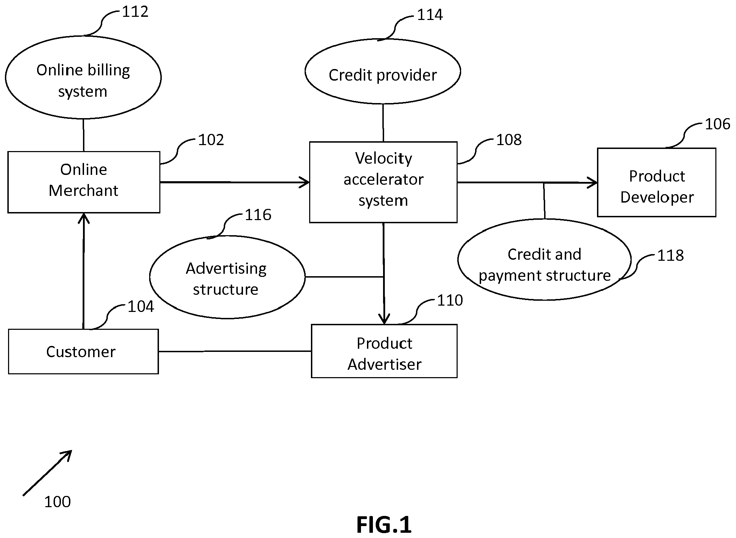

Embodiments of the present disclosure will now be described, by way of example only, with reference to the following diagrams wherein referring to FIG. 1, there is provided an environment 100, wherein various embodiments of the present disclosure can be practiced. The environment 100 includes an online merchant and/or manufacturing plant 102, a customer 104, a product developer 106, a control apparatus (VAS) 108, a product advertiser 110, an online billing system 112, a credit provider 114, an advertising structure 116, and a credit and payment structure 118. The online merchant and/or the manufacturing plant 102 is operable to consume resources, for example at least one of energy, materials, components, human labor, as well as generating one or more waste products, for example, off-cuts, manufacturing process waste, waste heat, and similar.

The online merchant and/or manufacturing plant **102** generally includes an online seller that enables the customer **104** to purchase one or more products online using at least one of: a mobile phone, a personal digital assistant, a tablet, a phablet, a webpad, a wearable computer, a mobile telephone, a wrist-worn computer, and a smart phone. Such contemporary ways of purchasing products are becoming increasingly used, in comparison to earlier methods, including purchase ledgers, component purchase departments and similar, Examples of the products include, but are not limited to:

(i) goods, such as electronic devices, pumps, filters, engine parts, boiler components, batteries, and similar;

(ii) services, such as information processing services, delivery services, taxi services, device repair services, cleaning services; and

(iii) software applications (Apps) downloadable from a software application store (app store), for example software applications relating to energy efficient domestic apparatus, such as intelligent refrigerators providing smart grid (electrical network demand balancing) functionality, gaming, presentation of sensed weather conditions, surveillance cameras, intruder alarm systems and such like.

The app store is an example of the online merchant **102**; the goods optionally including items of clothing, for example fashion clothing which potentially is subject to rapid changes in clothes fashions. The online merchant **102** employs the online billing system **112** to enable the customer **104** to pay for the purchased products using at least one of: credit card, debit card, Internet banking account, mobile banking, PayPal and Google checkout, "Google" and "Paypal" are registered trademarks.

The product developer **106** develops the products, such as software Apps, and sells them to the customer **104** through the online merchant **102**. In an example, the customer **104** purchases a product, for example an electronic device which utilizes an app from an online merchant **102** such as an app store. Thereafter, the product developer **106** receives the requisite payment in respect of the sale of the product from the control apparatus **108,** instead of the online merchant **102.** The control apparatus **108** pays the product developer **106** by way of the credit and payment structure **118,** before release of funds from the online merchant **102,** thereby enabling the product developer **106** to receive funds early and optionally deploy them for advertising and/or product development. The control apparatus 108 receives funds for early payout to the product developer **106** from the credit provider **114,** and later on, it is paid directly by the online merchant **102,** to settle with the credit provider **114** according to a separate contract.

In an embodiment of the present disclosure, the control apparatus 108 pays a portion of payment associated with the sale of the product, to the product developer **106,** and deploys remaining payment in promoting sales of the products, through the product advertiser **110** by way of the advertising structure **116.** The product advertiser **116** may be an apparatus, system or infrastructure that allows an advertisement to be directly placed or ceased from instructions received electronically. Examples include, but are not limited to, computers, mobile devices, billboard screens, websites and website hosts connected to a network.

Examples of the product advertiser **110,** include, but are not limited to, mobile advertising, native advertising with mobile (software) applications, website advertising, advertisement placement websites, such as Facebook; "Facebook" is a registered trademark. Thus, the control **108** increases the velocity of capital and/or physical resources when developing, marketing and selling one or more products of the product developer **106.** Such increase of the velocity of physical resources includes, for example, more efficient utilization of energy and/or physical materials.

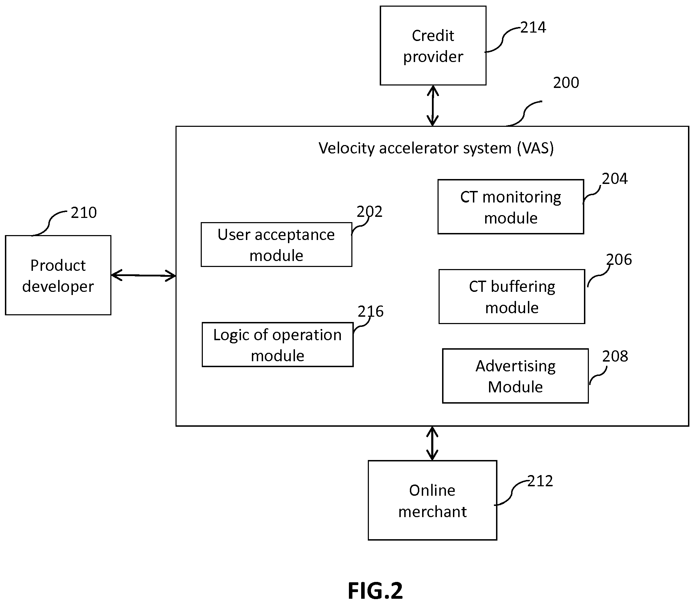

FIG. 2 is a schematic illustration of the control apparatus, here denoted by **200,** which is an example of the control apparatus **108,** in accordance with the present disclosure. The control apparatus **200,** denoted by "VAS", includes a user acceptance module **202,** a logic of operation module **216,** a commercial transaction monitoring module **204,** a commercial transaction buffering module **206,** and an advertising module **208.**

The user acceptance module **202** is configured to receive parameters of a system user such as a product developer **210,** and analyze those parameters to determine whether or not the product developer **210** is eligible to register with the control apparatus **200** and receive early payouts, in the form of monetary value, including credit, or other equivalent physical resources, in respect of corresponding products sold by the online merchant **212.** In an embodiment of the present disclosure, the product developer **210** sends a request to the user acceptance module **202** for registering therein. Thereafter, the user acceptance module **202** performs a user check and evaluation based on certain predefined user acceptance rules, for example, the user acceptance module **202** checks a credit history of the product developer **210,** determines whether he/she is a genuine product developer, and whether past sales of his/her products equals to or exceeds a set threshold value. Based on the evaluation, the user acceptance module **202** may rank a given product developer **210,** and based on the rank, allow the product developer **210** to register with the control apparatus **200.** After the product developer **210** registers with the control apparatus **200,** the control apparatus **200** is granted read/write access to developer's account with the online merchant **212.** The product developer's **210** account with the online merchant **212** includes information regarding corresponding products sold by the online merchant **212.**

The logic of operation module **216** is used for collecting product and sales activity of the system user such as a product developer **210** from a plurality of sources. Further, the logic of operation module **216** is operable to analyze, treat and model data and parameter associated with the product developer **210.** Subsequently, the logic of operation module **216** feeds the model data and parameter to the commercial transaction monitoring module (also referred as CT monitoring module) **204,** the commercial transaction buffering module (also referred as CT buffering module) **206** and the advertising module **208** including information and recommendations regarding current and projected sales revenues and optimum advertising time and host of the product developer **210.**

The commercial transaction monitoring module **204** is configured to monitor and/or to facilitate sales of products of the product developer **210.** In an embodiment of the present disclosure, the products are sold indirectly from the product developer **210** to a customer through the online merchant **212,** and as soon as a product is sold, it is updated immediately in the product developer's **210** account with the online merchant **212.** The commercial transaction monitoring module **204** continuously or periodically monitors the product developer's account with the online merchant **212,** and facilitates early payouts in respect of products thus sold. In certain situations the data itself is, for example, a day old and the analysis is then performed when the data is made available.

The commercial transaction buffering module **206** is configured to receive payment associated with the sale of a product from a credit provider, for example, a credit provider **214,** and pay the product developer **210** accordingly, where the payments to the product developer **210** are at least one of: temporally in advance of receipt of payment from the online merchant **212,** and, at temporal intervals which are more frequent than receipt of payment from the online merchant **212.** In an example, the commercial transaction buffering module **206** receives the payment from the online merchant **212** approximately within a period of 40 to 60 days of sale of the product, however, pays in advance to the product developer **210,** approximately within a period of 1 to 7 days of sale of the product.

The advertising module **208** is arranged to communicate with devices connected to a network of computer servers such as hosting websites and billboards. The advertising module **208** directly places or ceases to direct an advertisement of a product of the product developer **210** to product advertisers **110.** Examples of the product advertiser **110,** include, but are not limited to, mobile advertising, native advertising with mobile (software) applications, website advertising, advertisement placement websites, such as Facebook; "Facebook" is a registered trademark.

In an embodiment of the present disclosure, the commercial transaction buffering module **206** is configurable to pay a portion of the payments received from the credit provider **214** to the product developer **210,** and pay another portion of the received payments to one or more advertising promotions for promoting sales of the products of the product developer **210** via the advertising module **208.**

In another embodiment of the present disclosure, the commercial transaction buffering module **206** is operable to retain a portion of the payments associated with the sales of the product, for retention of operators of the control apparatus **200,** to finance operation of the control apparatus **200.**

The advertising module **208** is operable to direct advertisements for a product of the product developer **210,** based upon at least one of: monitoring markets into which the product is being sold, an analysis of potential markets in which the product is susceptible to being sold based on parameters describing one or more characteristics of the product.

The logic of operation module **216** is operable to collect real time data and information from devices and website hosts connected to the network. The logic of operation module **216** optionally collects the data and information which are associated with the sales activities of the product developer **210.** In an embodiment of the present disclosure the logic of operation module **216** recommends increase of an early advertising budget. The recommendation by the logic of operation module **216** is based on model parameters to calculate and recommend an optimum portion of revenues to be directed to the early advertising budget.

In an embodiment of the present disclosure, the logic of operation module **216** operable to model parameters, calculate and recommend the optimum advertising time and advertising host. Optionally, the logic of operation module **216** recommends the optimum advertising time and advertising host based on the early advertising budget, advertising costs and the instant or average consumer response to advertising at a particular host for a particular product. Moreover, the logic of operation module **216** is operable to project potential and real-time sales revenues. Optionally, the projected potential and real time sales revenue is based on market information and/or recommendations made to previous users.

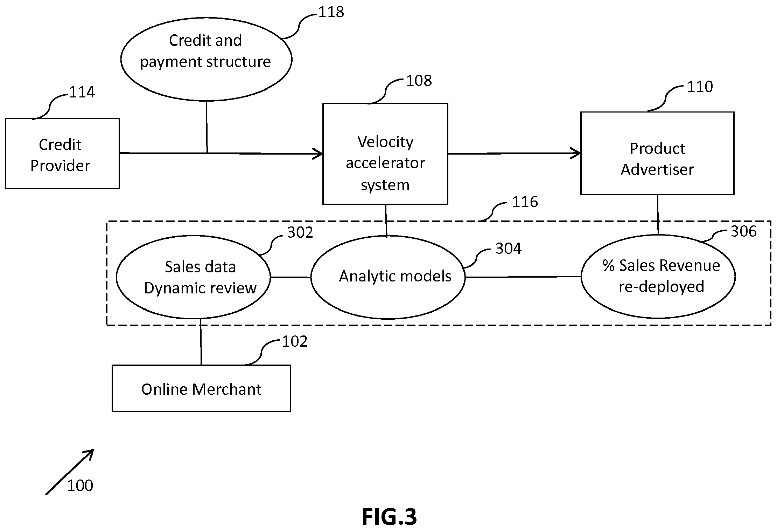

FIG. 3 is a detailed illustration of the advertising structure **116** of the environment **100,** in accordance with the present disclosure. The advertising structure **116** includes one or more decision making models and rules, based on which the control apparatus **108** deploys funds, or equivalent physical resources, for promoting sales of the products of the product developer **106.** Such decision making models and rules include, but are not limited to, sales data dynamic review **302,** analytic models **304,** and percentage of sales revenue re-deployed **306.**

The sales data dynamic review **302** includes dynamic reviews and examination of e-sales and advertising data, reviewing the product developer's **106** account with the online merchant **102,** and ranking the product developer **106** based on the number of times the corresponding product sales have exceeded a set threshold value.

The analytic models **304** are either in-house analytic models or external analytic models such as App Annie Analytics; "App Annie Analytics" is a trademark. The App Annie analytics is a free sales analytics dashboard for app publishers, which allows publishers to track their app downloads, revenues, rankings and reviews across multiple platforms, and where the publishers can access data via a web dashboard, daily email reports, export function, and API. The in-house analytic models may be configured to automatically input various parameters such as sales receivables and revenues (verified receivables) in advertising for decision making of various aspects in the control apparatus **108.**

The percentage of sales revenue re-deployed **306** is either fixed (for example, 80% of sales revenues) or a variable estimated based on analytical factors such as industry standard and industry average. In one embodiment of the present disclosure, percentage of sales revenue to be re-deployed for advertising are estimated based on a revenue redeployment model, which is speculated based on external analytics models such as App Annie analytics, and customer ranking from sales data dynamic review **302.**

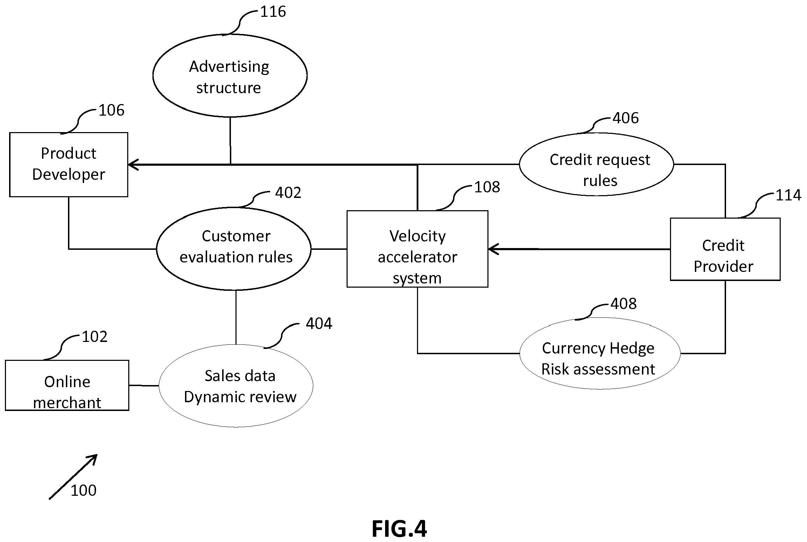

FIG. 4 is a detailed illustration of the credit and payment structure **118** of the environment **100,** in accordance with the present disclosure. The credit and payment structure **118** includes one or more decision making models and rules, based on which the control apparatus **108** receives a credit from the credit provider **114** and does an early payout to the product developer **106.** Such decision making models and rules include, but are not limited to, customer evaluation rules **402,** sales data dynamic review 404, which is an example of the sales data dynamic review **302,** credit request rules **406,** and currency hedge risk assessment **408.**

The customer evaluation rules **402** include various parameters used by the control apparatus **108** to determine whether or not a customer is suitable for registering with the control apparatus **108** for receiving an early pay-out. Such rules include, but are not limited to, periodic checks to check if bank information was not changed by the customer, credit history, past sales data and credibility of the customer.

The credit request rules **406** lay out various rules, credit amount, credit period, and various terms and conditions, between the credit provider **114** and the control apparatus **108.** The currency hedge risk assessment **408** facilitates hedging the accruals that arise from currency conversions during transactions between the credit provider **114** and the control apparatus **108.**

The control apparatus **108** accelerates and potentially multiplies online merchant's **102** payments to the product developers **106.** The acceleration aspect of the concept is clearly linked to early access to revenues (7 days in contradistinction to up to 60 currently), which, in turn, is linked to early advertisement. The revenue increase from the early advertisement is linked to a technical solution such as an automated decision-making analytics model **304.** The control apparatus **108** optimizes the revenue generation by financing early revenue collection and re-directing it to advertising. Early re-investment effectively enables a larger marketing budget, which is transformed into larger revenues. It can also be the basis for decreasing the cost of capital for developers seeking further investment with or without releasing more equity.

The concept is applicable to any business with a central billing system in which the control apparatus **108** can ingest/analyze data. The concept is applicable to industries with similar characteristics (e.g. payments via mobile networks). Essentially, the high level parameters are the existence of a central billing system for a digital product, typically with one or more high credit quality counterparties making payments to multiple suppliers/content providers.

One application area is Digital Advertising Market, in which publishers of Internet websites/mobile applications rely on payments from advertisers as a revenue stream. By interfacing directly into the ad server, the control apparatus 108 can make accelerated payouts to publishers who have generally to wait to collect the funds received from the ad network. The control apparatus 108 can also collaborate with the ad network to offer the service as an added-value-service to its publishers on a white label basis.

Another application area is eBook market, in which the control apparatus **108** can make accelerated payouts to eBook publishers/authors, who have generally to wait to collect funds from a marketplace such as Amazon; "Amazon" is a registered trademark.

Yet another application area is Digital Music Market, in which the control apparatus **108** can make accelerated payouts to record labels/digital music distributors, who have to generally wait to collect funds from a marketplace such as Apple and iTunes; "Apple" and "iTunes" are registered trademarks.

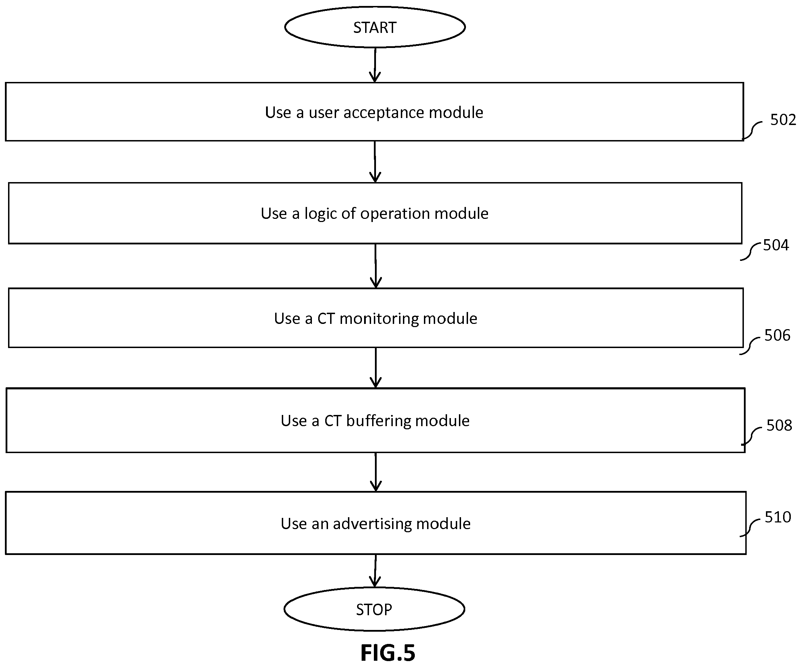

FIG. 5 is an illustration of steps of a method of using the environment **100,** also referred to as being a "system", in accordance with the present disclosure. The method is depicted as a collection of steps in a logical flow diagram, which represents a sequence of steps that can be implemented in hardware, software, or a combination thereof.

At a step **502,** the user acceptance module is used to receive one or more parameters describing at least one system user, and to analyze the one or more parameters to determine whether or not the at least one system user is acceptable to the control apparatus **108.**

At a step **504,** the logic of operation module is used for collecting product and sales activity of the at least one system user for analyzing, treating and modeling data and parameter associated with the at least one system, and for feeding sales monitoring, commercial transaction buffering modules and advertising module including information and recommendations regarding current and projected sales revenues and optimum advertising time and host

At a step **506,** the commercial transaction monitoring module is used to monitor and/or facilitate sales of one or more products from the at least one system user, accepted by the control apparatus **108,** to one or more customers of the system.

At a step **508,** the commercial transaction buffering module is used to receive payment associated with the sales of the one or more products, and to provide to the at least one system user, accepted by the control apparatus **108,** payments which are at least one of: temporally in advance of receipt of payment by the control apparatus **108** of documented sale of the one or more products to the one more customers, at temporal intervals which are more frequent than receipt of payment by the control apparatus 108 of documented sale of the one or more products to the one more customers.

At a step **510,** the advertising module is arranged for communicating with devices connected to a network of computer servers for directly placing or ceasing an advertisement of a product of the at least one system user, on at least on device or website.

It will be appreciated that the steps **502** to **510** are only illustrative and other alternatives can also be provided where one or more steps are added, one or more steps are removed, or one or more steps are provided in a different sequence without departing from the scope of the claims herein.

It will be appreciated that the control apparatus **108** is operable to handle at least one of financial movement, financial benefit, physical resources, materials, components, and is also operable to perform real time analytical treatment and transfer of real time information leading to practical benefits such as selectively utilizing materials, selectively using energy, as well as presenting or withdrawing an advertisement from a website or billboard. Alternatively, the control apparatus **108** is implemented as an analogous industrial environment, wherein an action triggered by an analytical step could be any beneficial action in that particular industrial environment, for example stop/start, product re-stocking in remote locations, such as shops or local warehouses, but not limited thereto.

The control apparatus **108** is, for example, operable to analyse the potential revenues of a commercial venture, for example an App developer's venture, and anticipate such revenues to an owner of the commercial venture, for example in the form of investment, or performing an action, in a key step of the owner's business. Ultimately, such a process results in higher efficiency for the owner's business corresponding to an increase in efficiency, denoted by "$d \in$". Different businesses will have different parameter that define the efficiency ($\in$), for example efficiency of utilization of physical commodities such as materials, energy, water, waste, and so forth.

There are two critical analytical steps utilized by the control apparatus **108:**

(i) The analyses of the potential revenues: in this case, the control apparatus 108 matches market information in respect of a given business sector with short term receivables (value 'v' in time 't'). When an early re-investment of at least a portion of the short term receivables (k*v, where k varies between 0 and 1) can potentially multiply the revenues by m*v (where m>1) of the owner's business in time 't', then an action ('A') is triggered;

(ii) The action 'A', by definition, is performed in a key step of the owner's business. The control apparatus 108 therefore applies a critical analytical function to determine if a particular action is likely to result in a corresponding increase in the aforementioned efficiency (d∈). In (ii), this critical analytical step is a function of [sales *information (S)* which, optionally, can be harvest in real time from Internet websites using *computer infrastructure*] and a ranking variable (R), which in turn, is based on an interactive process that forecasts which step in the owner's business is likely to result in the largest increase in efficiency (d∈);

(iii) The above process can be regarding as being a "virtuous circle", namely a beneficially cyclical iterative process, where the results of each interaction increases the beneficial effect of the next, should an operator of the control apparatus **108** and/or the aforementioned owner decide to re-start the process. In (iii), eventually a saturation point ($v_s$) will be reached and identified by (ii) above. At that stage, the control apparatus's 108 analytic functions will send a signal via a computer infrastructure to trigger a withdrawal of the action (A).

Optionally, the aforementioned system, managed by the control apparatus 108, is operable to connect a given client to their process via a dashboard which allows the given client full control to start/stop and/or override the process; as aforementioned, the process concerns at least one of physical resources, financial resources, waste resources, energy resources and similar. Advantageously, the control apparatus **108** is operable to provide a guaranteed debt facility rather than a third-party investment. The given client therefore becomes the user of a system, which in turn, uses its own given client's resources, although anticipating it via the debt facility, to increase efficiency, for example manifest as revenues when dealing with a financial system, but not limited thereto. As such, no third party is needed in embodiments of the present disclosure. Thus, when using a financial analogy, the process managed by the control apparatus 108 is completely different in comparison to factoring agencies or banks that '*buy receivables*' by input of third-party financial resources into the system.

The system in which the App developer, namely a client of the control apparatus **108,** benefits from early advertisement is hereinafter described in greater detail. It will be appreciated, for early investment associated with existing sales in App Stores, such App Stores tend to pay App developers within a range of 38 to 60 days from when the sale, for example usually paid download of the App, is made. Then, in (i) above, the value to be re-invested is set by this sales information (S). Such an approach eliminates a need for external input, namely of cash or another type of physical resource, and therefore a need for an external third-party to be involved.

Optionally, the value of S may be assigned as a monetary value determined from any commercial transaction activity in which the logic of operation module is able to assign a monetary value. The logic of operation module may assign a monetary value to any commercial transaction activity which ae uniquely identifiable and quantifiable. For example, the customer response to an advertisement of a product, for example measured by the number of clicks if such an advertisement if placed on a website, can be assigned a monetary value if the conversion between number of click and actual revenues received from sales is known or can be obtained by the control apparatus. A monetary value may alternatively or also be assigned from another performance metric associated with the system user and/or the customer's or with the overall market for a product of the said system user.

In this example, there is achieved an increase in efficiency which is measured by the optimum deployment of, for example, advertising time (brand exposure) on one or more information conveying vehicles. Since advertising is also associated with a cost, or a value, the increase in efficiency can be expressed using Equation 1 (Eq. 1):

$$d\epsilon = {(mv)}/{t} \qquad\qquad Eq.1$$

wherein

$d\epsilon$ = a increase in operating efficiency;
$m$=a multiplication factor that defines the increase in short-term revenues $v$=short-term revenues or receipt of equivalent physical resources; and $t$=time.

In the foregoing, less advertising time leads to more efficiency. A higher value of mv (effectively of m, since v is fixed) also leads to more efficiency. Moreover, if S is defined in terms of a particular monetary value, in the definition of v the short-term revenues may be replaced with the said monetary value. Mutatis mutandis, such increase in efficiency can be expressed in less consumption of energy, for example a reduced need to illuminate advertising billboards and similar.

Next, an App developer embodiment will be described, wherein the embodiment is implemented in steps or stages, which will elucidated in greater detail below.

In a step S1, a client, for example an owner of a new commercial venture which is concerned with development and sale of an App, makes an application to seek to use a process provided by the aforementioned control apparatus **108.**

In a step S2, the control apparatus 108 either accepts or does not accept the client; in an event that the client is accepted by the control apparatus **108,** a system managed by the control apparatus 108 launches the App, if not already launched, and performs analysis pursuant to (i) above: a value for the variable 'v' is known from App Store sales, critical step is defined as advertising, thus the action becomes to advertise early.

In a step S3, the control apparatus 108 then analyses marketing and sales information of similar Apps in step S2 above. The sales information S is obtained, for example, by harvesting information from the Internet, optionally in real time, from information which is indicative of the number of similar App's that are available, and their respective short-term revenues ($V_i$). A ranking (R) is then constructed to define the potential increase in efficiency d, for example a potential increase in revenues ($mv$) in a pre-defined time t. Optionally, the time t is between 1 and 60 days, for example due to the usual operation of App stores; more preferably, the time t is in a range of 38 to 60 days. A number of functions can be use to define the ranking R, dependant on the preference of control apparatus 108 for a particular given industry. For App's, the ranking can be a simple analysis of revenues, $V_i$, wherein a given App with higher revenues $V_i$ is placed on top of an App with lower revenues $V_i$, in a ranking list. Optionally, the portion of the revenues that need to be deployed early (kv) is also defined. This step can, for example, be by-passed, by using k=1. More, optionally, the parameter k can be defined based, in part, on a deviation from the average value of revenue $V_i$, as shown below.

Steps S1, S2 and S3 are optionally be repeated, where at each step the short-term revenues v assume a new higher value. However, at the start of each cycle, this new value is set as v, and therefore there is no need to define a new variable in the process.

After a critical number of repetitions, a saturation point is reached when $d \in =0$. This saturation point can defined by the revenues $v_s$. Moreover, when $v_s$=v and thus, by definition m=0, because the short term revenues remain unchanged even with early advertisement, for example.

Optionally, the sales information S can be a function of revenues $v_i$, as defined below in Equation 2 (Eq. 2):

$$S = \sum_{i=1}^{i=n} v_i \qquad \text{Eq.2}$$

wherein, 'i' varies between "*1*" (the commercial venture of the client of the control apparatus 108) and '*n*', which is the number of similar commercial ventures (App's) in the market, namely in the App Stores.

The average short term revenue v can be defined by Equation 3 (Eq. 3):

$$\bar{v} = S/n \qquad \text{Eq. 3}$$

Therefore, the deviation ($\delta$) from the average $\bar{v}$ can be calculated using Equation 4 (Eq. 4):

$$\delta = \sqrt{(v - \bar{v})^2} \qquad \text{Eq. 4}$$

Finally, the value of "k" can be defined by a specific function dependant on ($\delta$) and the pre-defined time (t), using Equation 5 (Eq. 5):

$$k = f(\delta, t) \qquad \text{Eq. 5}$$

wherein $v_1$=v, by definition since the process only starts when there is at least one App in the market, which is the client of the control apparatus 108.

Optionally, the specific function that defines the value of "k" can be a direct application or a combination or adaptation of one or more cumulative distribution functions, known as "CDF's", for example applied as part of the optimization of a given logistics distribution systems. For example:

$$k = 1 - e^{-\delta/t} \qquad \text{Eq. 6}$$

Or even

$$k = \frac{\alpha}{1+e^{-[\frac{(\delta-\mu)}{t}]}}$$

Eq. 7

wherein "$\alpha$" is the maximum value and "$\mu$=0.5*A".

wherein, as the time "t" increases, the resources allocated, for example to early advertisement, also increases, as intuitively expected. The minimum, maximum and optimum values of k will depend upon the function used, which in turn will depend upon all the data, information and parameters associated with the system user, as well as a choice based on previous experience derived from similar areas of activity.

Several industries can potentially benefit from use of the control apparatus **108** and its associated method of operation. An example of such an industry concerns the logistics of product distribution for fast-moving commercial products (FMCP), namely products which temporally change rapidly and have relatively short product lifetimes. In such an industry, a key problem is to control, via a control apparatus 108, the flow of products from a factory, via a distribution center, to local stores or warehouses from distribution based upon on-line sales.

Moreover, it will be appreciated that the defined action can be a combined action of advertisement and reinvestment in the process to increase production, wherein the production utilizes raw materials.

In the foregoing, the analytical processes involve the definition of an Action and of a saturation point ($v_s$) using parameters $v, t, m$ and $k$. It involves constructing a ranking (R) dependent on sales information S, including similar values of v and vs. An analogous process includes, for example:

1. the action (A) is, for example, defined as "movement of products in relation to increase in sales due to early advertisement". By definition, to move more products, more raw materials and resources in general need to be applied in a given factory or even more transport units in a warehouse;
2. While in the App example in the forgoing, there can be multiple App stores, in the present analogous example, there will be multiple points of sale of products;
3. The benefit can now be an increase in sales due to advertisement that can only be realized via a more efficient/optimum re-stocking of products leading to less use of resources in the logistics process. To achieve this increased efficiency, early investment in the process needs to be made temporally concurrently;
4. The aforementioned can be based on the same analytics, which are optionally harvested in real-time, for example via use of a data-logging process.

The algorithms used by the control apparatus pursuant to the present disclosure are beneficially used to control the utilization of physical resources (for example materials and energy), as well as financial resources, for improving, for accelerating, performance of a given system that is control by the control apparatus, mutatis mutandis that a suitable control apparatus improves efficiency of operation of a power generating facility or oil and gas production facility.

Modifications to embodiments of the invention described in the foregoing are possible without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

**Claims**

1. A control apparatus for improving an operating performance of a system, wherein the control apparatus is operable to improve a rate of performance of the system by increasing a velocity of flow of capital, commodities and/or resources when developing, marketing and/or performing a commercial transaction one or more products, wherein the control apparatus includes: (i) a user acceptance module for receiving one or more parameters describing at least one system user, and for analyzing the one or more parameters to determine whether or not the at least one system user is acceptable to the control apparatus; (ii) a logic of operation module for collecting from a plurality of sources, analyzing, treating and modelling data and parameters and assign a monetary value associated with one or more commercial transactions of the at least one system user, accepted by the control apparatus, and for feeding commercial transaction monitoring and buffering modules and an advertising module with information and recommendations regarding current and projected monetary value resulting from one or more commercial transactions and optimum advertising time and host; (iii) the commercial transaction monitoring module arranged for monitoring and/or facilitating one or more commercial transactions associated with of one or more products from the at least one system user to one or more customers of the system user, wherein the monitoring and/or facilitating of commercial activity includes monitoring and/or facilitating of one or more elements of finance, physical materials, mechanical components, electrical components, packaging; and (iv) a commercial transaction buffering module for receiving information related to one or more commercial transactions associated with of one or more products of the at least one system user and for providing to the at least one system user payments or rewards, including in the form of credit, which are at least one of: temporally in advance of receipt of payment by the control apparatus of a documented sale of the one or more products to the one more customers, at temporal intervals which are more frequent than the receipt of payment associated with the documented sale of the one or more products to the one more customers; and (v) the advertising module arranged for communicating with devices connected to a network of computer servers for directly placing or ceasing an advertisement of a product of the at least one system user, on at least one device or website.

2. The control apparatus of claim 1, wherein, wherein the commercial transaction buffering module is configurable to divide a portion of the received payments to the at least one system user, accepted by the control apparatus, and another portion of the received payments to one or more advertising promotions for promoting sales of the one or more products via an advertising module of the control apparatus.

3. The control apparatus of claim 1, wherein the one or more products include one or more software applications (Apps) downloadable from a software application store (app store) to the one or more customers, wherein the one or more software products are executable upon computing hardware for providing a technical operating functionality to the computing hardware.

4. The control apparatus of claim 1, wherein the commercial transaction buffering module, for receiving payment associated with the sales of the one or more products, is operable to retain a portion of the payment for retention of one or more operators of the control apparatus, to finance operation of the control apparatus.

5. The control apparatus of claim 2, wherein the advertising module is operable to place or to cease advertisements for the one or more products based upon at least one of: monitoring markets into which the one or more products are being sold, an analysis of potential markets in which the one or more products are susceptible to being sold based on parameters describing one or more characteristics of the one or more products.

6. The control apparatus of claim 1, wherein the logic of operation module collects real time data and information from devices and website hosts connected to a network, wherein the data and information are associated with the commercial transaction activities of the at least one system user.

7. The control apparatus of claim 6, wherein the logic of operation module is configured to recommend increase of an early advertising budget, wherein the recommendations are based on model parameters to calculate and recommend an optimum portion of the monetary value to be directed to an early advertising budget, wherein the logic of operation module is configured to model parameters, calculate and recommend the optimum advertising time and advertising host, wherein the recommendation is based on early advertising budget, advertising costs and the instant or average consumer response to advertising at a particular host for a particular product, and wherein the logic of operation module is configured to project potential and real-time revenues from commercial transactions, wherein the projected potential and real time revenues are based on market information and/or recommendations made to previous users.

8. A method of using a control apparatus of a system for increasing a velocity of capital and/or resources when developing, marketing and selling one or more products to be delivered from the system, wherein the method includes: (i) using a user acceptance module for receiving one or more parameters describing at least one system user, and for analyzing the one or more parameters to determine whether or not the at least one system user is acceptable to the control apparatus; (ii) using a logic of operation module for collecting from a plurality of sources, analyzing, treating and modelling data and parameters and assign a monetary value associated with one or more commercial transactions of the at least one system user, accepted by the control apparatus, and for feeding commercial transaction monitoring and buffering modules and an advertising module with information and recommendations regarding current and projected monetary value resulting from one or more commercial transactions and optimum advertising time and host; (iii) using the commercial transaction monitoring module arranged for monitoring and/or facilitating one or more commercial transactions associated with of one or more products from the at least one system user to one or more customers of the system user, wherein the monitoring and/or facilitating of commercial activity includes monitoring and/or facilitating of one or more elements of finance, physical materials, mechanical components, electrical components, packaging; and (iv) using a commercial transaction buffering module for receiving information related to one or more commercial transactions associated with of one or more products of the at least one system user and for providing to the at least one system user payments or rewards, including in the form of credit, which are at least one of: temporally in advance of receipt of payment by the control apparatus of a documented sale of the one or more products to the one more customers, at temporal intervals which are more frequent than the receipt of payment associated with the documented sale of the one or more products to the one more customers; and (v) using the advertising module arranged for communicating with devices connected to a network, including but not limited to local or remote computers, mobile devices, computer servers hosting websites and billboards; and for directly placing or ceasing an advertisement of a product of the at least one system user, on at least one device or website.

9. The method of claim 8, wherein the method includes configuring the commercial transaction buffering module is configurable to divide a portion of the received payments to the at least one system user, accepted by the control apparatus, and another portion of the received payments to one or more advertising promotions for promoting sales of the one or more products via an advertising module of the control apparatus.

10. The method of claim 8, wherein the one or more products include one or more software applications (Apps) downloadable from a software application store (app store) to the one or more customers, wherein the one or more software products are executable upon computing hardware for providing a technical operating functionality to the computing hardware.

11. The method of claim 8, wherein the commercial transaction buffering module, for receiving payment associated with the sales of the one or more products, is operable to retain a portion of the payment for retention of one or more operators of the control apparatus, to finance operation of the control apparatus.

12. The method of claim 8 the advertising module is operable to place or to cease advertisements for the one or more products based upon at least one of: monitoring markets into which the one or more products are being sold, an analysis of potential markets in which the one or more products are susceptible to being sold based on parameters describing one or more characteristics of the one or more products.

13. The method of claim 8, wherein the logic of operation module collects real time data and information from devices and website hosts connected to a network, wherein the data and information are associated with the commercial transaction activities of the at least one system user.

14. The method of claim 8, wherein the logic of operation module recommends increase of an early advertising budget, wherein the recommendations are based on model parameter to calculate and recommend an optimum portion of the monetary value to be directed to an early advertising budget, wherein the logic operation of module is configured to model parameters, calculate and recommend the optimum advertising time and advertising host, wherein the recommendation is based on early advertising budget, advertising costs and the instant or average consumer response to advertising at a particular host for a particular product, and wherein the logic of operation module is configured to project potential and real-time revenues from commercial transactions, wherein the projected potential and real time revenues are based on market information and/or recommendations made to previous users.

15. A computer program product comprising a non-transitory computer-readable storage medium having computer-readable instructions stored thereon, the computer-readable instructions being executable by a computerized device comprising processing hardware for implementing the method of claim 10.

**FIG.1**

FIG.2

FIG.3

EP 3 166 064 A1

FIG.4

```
                          ┌─────────────┐
                          │    START    │
                          └─────────────┘
                                 │
                                 ▼
   ┌─────────────────────────────────────────────────────────┐
   │            Use a user acceptance module                  │────  502
   └─────────────────────────────────────────────────────────┘
                                 │
                                 ▼
   ┌─────────────────────────────────────────────────────────┐
   │            Use a logic of operation module               │────  504
   └─────────────────────────────────────────────────────────┘
                                 │
                                 ▼
   ┌─────────────────────────────────────────────────────────┐
   │            Use a CT monitoring module                    │────  506
   └─────────────────────────────────────────────────────────┘
                                 │
                                 ▼
   ┌─────────────────────────────────────────────────────────┐
   │            Use a CT buffering module                     │────  508
   └─────────────────────────────────────────────────────────┘
                                 │
                                 ▼
   ┌─────────────────────────────────────────────────────────┐
   │            Use an advertising module                     │────  510
   └─────────────────────────────────────────────────────────┘
                                 │
                                 ▼
                          ┌─────────────┐
                          │    STOP     │
                          └─────────────┘
```

**FIG.5**

Europäisches
Patentamt

European
Patent Office

Office européen
des brevets

# EUROPEAN SEARCH REPORT

**Application Number**

EP 16 02 0390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical features, namely devices such as local or remote computers and mobile devices, connected to a network of computer servers hosting websites, and billboards, are therefore considered to be part of the notorious knowledge, for which no documentary evidence is deemed necessary (see Guidelines for Examination in the European Patent Office, B-VIII, 2.2.1).<br>----- | | INV.<br>G06Q30/02<br>G06Q40/02<br>G06Q10/06 |
| | | | **TECHNICAL FIELDS SEARCHED (IPC)**<br><br>G06Q |

The present search report has been drawn up for all claims

| Place of search | Date of completion of the search | Examiner |
|---|---|---|
| The Hague | 31 March 2017 | Guenov, Mihail |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012278175 A1